(19) **Europäisches Patentamt European Patent Office Office européen des brevets**

(11) **EP 2 077 306 B1**

(12) **FASCICULE DE BREVET EUROPEEN**

(45) Date de publication et mention de la délivrance du brevet:
**03.11.2010 Bulletin 2010/44**

(51) Int Cl.:
***C10G 2/00*** *(2006.01)* ***B01J 23/75*** *(2006.01)*

(21) Numéro de dépôt: **08291232.0**

(22) Date de dépôt: **23.12.2008**

(54) **Procédé amélioré de synthèse Fischer-Tropsch par contrôle de la pression partielle d'eau dans la zone réactionnelle**

Verbessertes Verfahren der Fischer-Tropsch-Synthese durch Kontrolle des Wasserpartialdrucks in der Reaktionszone

Improved Fischer-Tropsch synthesis method by controlling the partial water pressure in the reaction zone

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **04.01.2008 FR 0800056**

(43) Date de publication de la demande:
**08.07.2009 Bulletin 2009/28**

(73) Titulaires:
• **IFP Energies nouvelles**
 **92852 Rueil-Malmaison Cedex (FR)**
• **ENI S.p.A.**
 **00144 Rome (IT)**

(72) Inventeurs:
• **Marion, Marie Claire**
 **69390 Vernaison (FR)**
• **Hugues, François**
 **69390 Vernaison (FR)**
• **Roy-Auberger, Magalie**
 **38300 Nivolas Vermelle (FR)**

(56) Documents cités:
**WO-A-2007/112314 WO-A-2007/131082**

• **DALAI A K ET AL: "Fischer-Tropsch synthesis: Water effects on Co supported on narrow and wide-pore silica" APPLIED CATALYSIS A: GENERAL, ELSEVIER SCIENCE, AMSTERDAM, NL, vol. 289, no. 2, 10 août 2005 (2005-08-10), pages 135-142, XP004978680 ISSN: 0926-860X**

**Description**

La présente invention concerne le domaine de la synthèse d'hydrocarbures à partir d'un gaz de synthèse par une étape de synthèse Fischer-Tropsch. Elle concerne plus particulièrement un procédé amélioré de synthèse Fischer-Tropsch permettant de maximiser la production d'hydrocarbures tout en minimisant les coûts d'opération, notamment les coûts inhérents à la consommation de catalyseur.

L'invention a pour objet un procédé amélioré de synthèse d'hydrocarbures à partir de gaz de synthèse dans lequel la pression partielle d'eau dans le réacteur de synthèse est contrôlée afin de la maintenir en deçà d'une valeur critique $ppH_2O_{limit.}$ qui dépend de la température du réacteur et des caractéristiques physico-chimiques du catalyseur mis en oeuvre. L'invention permet d'augmenter la durée de vie du catalyseur et de limiter sa dégradation mécanique. Elle s'applique tout particulièrement dans le cas des procédés Fischer-Tropsch mis en oeuvre dans les complexes XTL (GTL, CTL ou BTL, respectivement "Gas To Liquid", "Coal To Liquid" et "Biomass To Liquid" selon la terminologie anglo-saxonne).

**Art antérieur**

La réaction de conversion du gaz de synthèse (mélange comprenant du monoxyde de carbone, de l'hydrogène et éventuellement du dioxyde de carbone) en hydrocarbures est connue depuis le début du vingtième siècle et est communément appelée synthèse Fischer-Tropsch. Des unités ont été opérées en Allemagne pendant la seconde guerre mondiale, puis en Afrique du Sud afin de synthétiser des carburants synthétiques. La majorité de ces unités, essentiellement dédiées à la production de carburants synthétiques, étaient ou sont encore opérées avec des catalyseurs à base de fer.

Plus récemment, un nouvel intérêt s'est manifesté envers ces synthèses, et plus particulièrement envers l'utilisation de catalyseurs comprenant du cobalt qui permettent d'orienter la réaction vers la formation d'hydrocarbures plus lourds, principalement paraffiniques, essentiellement des hydrocarbures C5+ (hydrocarbures comprenant 5 atomes de carbone ou plus par molécule), tout en minimisant la formation de méthane et d'hydrocarbures ayant entre 2 et 4 atomes de carbone par molécule (C2 - C4). Les hydrocarbures ainsi formés peuvent être transformés dans une unité d'hydrocraquage en aval, afin de produire majoritairement du kérosène et du gasoil. Un tel procédé est par exemple décrit dans le brevet EP-B-1 406 988.

L'utilisation de catalyseur comprenant du cobalt est plus adaptée pour traiter des gaz de synthèse (charge) plus riche en hydrogène, issu de la transformation de gaz naturel notamment.

De nombreuses formulations à base de cobalt ont été décrites dans l'art antérieur et par exemple dans les demandes de brevet EP-A-0 313 375 ou EP-A-1 233 011. Contrairement aux catalyseurs à base de fer qui sont actifs dans la réaction de conversion du CO (en $CO_2$, water gas shift reaction ou WGSR selon la terminologie anglo-saxonne):

$CO + H_2O \rightarrow CO_2 + H_2$ , les catalyseurs à base de cobalt ne présentent que très peu d'activité pour cette réaction (B.H. Davis, Catalysis Today, 84, 2003, p.83).

Par conséquent, selon les conditions opératoires utilisées (pression, température, niveau de conversion...), de fortes pressions partielles de vapeur d'eau peuvent être générées lors de la réaction Fischer-Tropsch. Ces conditions sévères peuvent être néfastes au catalyseur et provoquer rapidement sa dégradation.

L'effet de l'eau sur des catalyseurs Fischer-Tropsch au cobalt a, par exemple, été étudié par M. Rothaemel et col. (Catalysis Today, Vol. 38, Issue 1, 1997, p. 79-84) qui a mis en évidence une désactivation de catalyseurs supportés avec du cobalt sur alumine due à l'eau. La désactivation s'explique par la perte de sites actifs et plus précisément, par l'oxydation du cobalt métallique en surface.

Le phénomène de désactivation par l'eau de catalyseurs Fischer-Tropsch a également été étudié par P.J van Berge et col. (Catalysis today, Vol. 58, Issue 4, May 2000, p. 321-334). Ils ont montré par différents moyens analytiques que le phénomène d'oxydation de catalyseurs au cobalt réduits était fonction du ratio $P_{H2}$ / $P_{H2O}$.

L'effet de l'eau sur les catalyseurs au cobalt est également décrit par Dalai et al. (Applied Catalysis A: General 289 (2005) 135-142).

WO 2007/112314 décrit un procédé Fischer-Tropsch utilisant une pression partielle en eau comprise entre 2.1 et 2.9 bar.

Dans le document US 2004/0127586, il est décrit un procédé permettant de fabriquer des catalyseurs à stabilité hydrothermale améliorée en introduisant dans leur composition des agents stabilisants tels que du bore, du cobalt et du zirconium.

Le document US 6,262,132 B1 décrit une méthode visant à réduire l'attrition de catalyseurs mis en oeuvre en réacteur de type" slurry" et dans d'autres types de réacteurs susceptibles de conduire à des pertes de catalyseur par fragmentation, abrasion...etc. Dans ce document,

il est divulgué un support de catalyseur contenant une certaine quantité de titane permettant d'augmenter la résistance à l'attrition du catalyseur.

En ce qui concerne l'effet de l'eau, la dégradation des catalyseurs par transformation de la phase active, due à l'oxydation ou à un phénomène de transformation en espèce moins réductible, est souvent citée. Mais il est également connu que l'eau produite par la réaction Fischer-Tropsch ou bien encore que le fait d'ajouter volontairement de l'eau dans le réacteur de synthèse permet d'augmenter l'activité d'un catalyseur contenant du cobalt (J. Catal, 211, 2002, 422). L'effet positif de l'eau sur la sélectivité de la réaction Fischer-Tropsch est également rapporté. Ainsi, l'effet de l'eau sur les catalyseurs utilisés pour la réaction fischer-Tropsch est très équivoque et les explications pour rendre compte des différents résultats font défaut (M E Dry, Stud Surf Sci Cata 152, 2004, p. 577-578).

La demanderesse a découvert que le fait de contrôler la pression partielle d'eau dans le réacteur de synthèse Fischer-Tropsch permettait de limiter le phénomène de dégradation du catalyseur et notamment celle de ses propriétés mécaniques, ce qui est crucial pour un procédé de type slurry ou lit bouillonnant où le catalyseur mis en mouvement est soumis à des contraintes mécaniques importantes. Le procédé selon l'invention présente également l'avantage, du fait de la plus grande stabilité mécanique du catalyseur au cours du temps, de faciliter l'étape ultérieure de séparation des produits de la réaction et du catalyseur.

Un autre avantage est de limiter la baisse des performances du catalyseur en limitant sa transformation physico-chimique et ainsi de maintenir au cours du temps de bonnes performances catalytiques en termes de productivité et de sélectivité.

### Résumé de l'invention

L'invention a pour objet un procédé amélioré de synthèse d'hydrocarbures à partir d'une charge de type gaz de synthèse obtenu, par exemple, à partir de gaz naturel, charbon et/ou biomasse dans lequel on met en contact ledit gaz de synthèse avec un catalyseur dans un réacteur dans les conditions de synthèse Fischer-Tropsch et dans lequel on contrôle la pression partielle d'eau pour la maintenir en deçà d'une valeur critique.

Elle permet de limiter tout phénomène de dégradation mécanique du catalyseur et permet ainsi de maintenir des performances élevées, notamment en terme de rendement en produits lourds (hydrocarbures C5+).

### Description détaillée

L'invention concerne un procédé de synthèse d'hydrocarbures à partir d'une charge de type gaz de synthèse obtenu, par exemple mais de manière non restrictive, à partir de gaz naturel, charbon et/ou biomasse dans lequel on met en contact ledit gaz de synthèse avec un catalyseur dans un réacteur dans les conditions de synthèse Fischer-Tropsch et dans lequel on contrôle la pression partielle d'eau pour la maintenir en deçà d'une valeur critique $ppH_2O_{limit.}$ définie par la formule:

$$ppH_2O_{limit.} = \exp\left(-7751/d_p.T\right).P_s(T)$$

où

T est la température de réaction en K,
$d_p$ est le diamètre moyen des pores du catalyseur en nm, déterminé par adsorption-désorption d'azote (méthode BJH, Barrett, Joymer et Halenda),
$P_s(T)$ est la pression de vapeur saturante de l'eau à la température T, en bar.

Le procédé selon l'invention permet d'améliorer l'opération du réacteur de synthèse Fischer-Tropsch en limitant le phénomène de dégradation des propriétés mécaniques du catalyseur lié à la présence de vapeur d'eau dans le réacteur de synthèse. Par dégradation, on entend une transformation physico-chimique du catalyseur qui entraine une diminution de ses propriétés mécaniques et notamment de sa résistance à l'attrition.

Pour l' Homme du métier, il est déterminant de limiter tout phénomène d'attrition, d'érosion, de fragmentation ou de rupture du catalyseur, inhérent à la mise en oeuvre de particules, notamment dans des réacteurs de type "slurry" ou lit bouillonnant mais également de type lit fixe.

La demanderesse a découvert que le fait d'opérer le réacteur de synthèse Fischer-Tropsch en maintenant la pression partielle d'eau en deçà d'une valeur limite à l'intérieur de celui-ci permet de limiter considérablement le phénomène de dégradation mécanique du catalyseur et, par conséquent, d'améliorer l'opération. En effet, la moindre production de fines lors de l'opération du réacteur permet un gain au niveau de la consommation de catalyseur mais également une séparation plus aisée du catalyseur et des produits de la réaction. De plus, en maintenant la pression partielle d'eau dans le réacteur en deçà d'un certain seuil, on limite également la désactivation du catalyseur et on maintient ainsi la productivité à un bon niveau.

Dans le procédé selon l'invention, la dégradation mécanique du catalyseur est évaluée en mesurant l'évolution de la quantité de fines (% volume) de taille inférieure à 10 microns, générées lors d'un test de synthèse Fischer-Tropsch. La mesure est effectuée au moyen d'un granulomètre à diffraction laser LS230® de la société Coulter, en utilisant l'heptane comme diluant.

L'activité du catalyseur est évaluée à partir du niveau de conversion des réactifs, conversion de CO par exemple, dans un test catalytique mettant en oeuvre la réaction Fischer-Tropsch dans des conditions données (P, T, VVH...).

Le procédé selon l'invention comme defini dans la revendication 1 consiste à maintenir la pression partielle d'eau dans le réacteur de synthèse en deçà de la valeur critique définie par la formule:

$$ppH_2O_{limit=} \exp{(-7751/d_p.T)}.P_s(T)$$

où

T est la température de réaction en K,

$d_p$ est le diamètre moyen des pores du catalyseur en nm, déterminé par adsorption-désorption d'azote (méthode BJH),

$P_s(T)$ est la pression de vapeur saturante de l'eau à la température T, en bar.

De préférence, la pression partielle d'eau dans le réacteur est contrôlée et maintenue en deçà de la valeur $0{,}95.ppH_2O_{limit.}$. De manière encore préférée, celle-ci est contrôlée et maintenue en deçà de la valeur $0{,}9.ppH_2O_{limit}$ et de manière encore plus préférée, en deçà de la valeur $0{,}8.ppH_2O_{limit.}$.

La pression partielle d'eau dans le réacteur est de preférence strictement inférieure à la pression partielle d'hydrogène, de manière encore préférée la pression partielle d'eau dans le réacteur est inférieure ou égale à 0,8 fois la pression partielle d'hydrogène et de manière encore plus préférée inférieure ou égale à 0,7 fois la pression partielle d'hydrogène. De cette manière, les performances du procédé sont optimisées, notamment en termes de sélectivité en hydrocarbures les plus lourds et de stabilité du catalyseur.

La température T (en Kelvin) est celle de la zone réactionnelle (imposée au niveau du réacteur). Lorsque le réacteur comporte plusieurs zones réactionnelles opérant à des températures différentes, le contrôle de la pression partielle d'eau est effectué zone par zone et est généralement comprise entre 100 et 500°C, de manière préférée entre 180 et 300°C.

Le diamètre moyen des pores $d_p$ est déterminé à partir de la méthode BJH (Barrett, Joymer et Halenda) d'adsorption et désorption d'azote à 77 K. Il correspond à la valeur du rapport 4V/A, V étant le volume BJH désorbé et A l'aire des pores BJH à désorption.

Pour les catalyseurs utilisés dans le procédé selon l'invention, le diamètre moyen est compris entre 0,1 et 100 nm, de préférence entre 1 et 50 nm (1 nm= $10^{-9}$ m).

La pression de vapeur saturante de l'eau est donnée par les tables thermodynamiques bien connues de l'Homme du métier et est exprimée en bar (1 bar= $10^5$ Pa).

En ce qui concerne la pression partielle d'eau, celle-ci est déterminée selon la définition de l'Homme du métier, à partir de la composition molaire de la phase gaz contenue dans l'enceinte réactionnelle et de la pression totale: $pp_{H2O}= (x_{H2O}/\Sigma x_i).P_T$

où

$x_{H2O}$ est la fraction molaire en eau
$x_i$ est la fraction molaire en composé i
$P_T$ est la pression totale du réacteur.

Généralement, la composition molaire de la phase gaz est déterminée par analyse CPG (Chromatograghy Phase Gas) d'un échantillon prélevé à la sortie du réacteur. Tout autre moyen connu de l'Homme du métier est utilisable pour déterminer la composition de la phase gazeuse. Par exemple, elle peut être également obtenue par calcul à partir des données de bases de la réaction Fischer-Tropsch: ratio $H_2/CO$, niveau de conversion et de la distribution des produits.

A titre illustratif, le tableau 1 ci-après indique des valeurs de pression partielle d'eau critique pour différentes valeurs de température et de diamètre moyen de pores pour le catalyseur.

tableau 1: valeurs de ppH2O$_{limit}$(en bar) en fonction de la température et du diamètre moyendes pores du catalyseur

| T (°C) | T (K) | diam. moyen pore 10 nm | diam. moyen pore 9 nm | diam. moyen pore 8 nm |
|--------|-------|------------------------|-----------------------|-----------------------|
| 210 | 483 | 3,91 | 3,27 | 2,62 |
| 215 | 488 | 4,37 | 3,66 | 2,94 |
| 220 | 493 | 4,87 | 4,09 | 3,28 |
| 225 | 498 | 5,41 | 4,55 | 3,67 |
| 230 | 503 | 6,00 | 5,05 | 4,08 |

Le procédé selon l'invention est mis en oeuvre dans un réacteur de synthèse Fischer-Tropsch, soit en lit fixe (réacteur avec un catalyseur en lit fixe ou bien encore avec un ou plusieurs lits de catalyseur dans un même réacteur), ou préférentiellement dans un réacteur triphasique (mise en oeuvre en "slurry" selon la terminologie anglo-saxonne) comprenant le catalyseur en suspension dans une phase liquide essentiellement inerte et la phase gazeuse réactive (gaz de synthèse).

Le gaz de synthèse utilisé pour la réaction peut être obtenu via la transformation du gaz naturel, du charbon, ou de la biomasse par des procédés tels que le vaporeformage ou l'oxydation partielle, ou encore via la décomposition du méthanol, ou à partir de tout autre procédé connu de l'Homme du métier. Toute charge comprenant au moins de l'hydrogène et du monoxyde de carbone peut donc convenir. De préférence, le gaz de synthèse utilisé dans la synthèse Fischer-Tropsch présente un rapport molaire $H_2$/CO compris entre 1:2 et 5:1, de manière plus préférée entre 1,2:2 et 3:1 et de manière encore plus préférée entre 1,5:1 et 2,6:1. Le gaz de synthèse comprend généralement en sus une faible proportion de dioxyde de carbone ($CO_2$), de préférence moins de 15% en volume, voire moins de 10% en volume.

La synthèse Fischer-Tropsch est généralement mise en oeuvre sous une pression comprise entre 0,1 MPa et 15 MPa, de préférence comprise entre 1 MPa et 10 MPa et de manière plus préférée comprise entre 1,5 et 5 MPa. La vitesse volumétrique horaire du gaz de synthèse est généralement comprise entre 100 et 20000 h$^{-1}$ (volume de gaz de synthèse par volume de catalyseur et par heure), de préférence entre 400 et 10000 h$^{-1}$.

Tout catalyseur adapté à la synthèse Fischer-Tropsch connu de l'Homme du métier convient au procédé selon l'invention, notamment ceux mentionnés dans la partie "Art Antérieur" de cette demande. On utilise de préférence un catalyseur supporté, le support étant préférentiellement choisi parmi les oxydes du groupe formé par l'alumine, la silice, la zircone, l'oxyde de titane, l'oxyde de magnésium ou leurs mélanges. De manière préférée, le support du catalyseur contient l'élément Al.

De manière très préférée, le catalyseur mis en oeuvre selon l'invention est un catalyseur comprenant un support à base d'alumine et contenant du cobalt.

Différents promoteurs connus de l'Homme du métier peuvent également être ajoutés, notamment ceux sélectionnés parmi les éléments suivants: rhénium, ruthénium, molybdène, tungstène, chrome. Il est également possible d'ajouter au moins un alcalin ou alcalino-terreux dans la formulation du catalyseur.

Selon le procédé de l'invention la pression partielle d'eau dans le réacteur est contrôlée en mettant en oeuvre les actions suivantes:

a) détermination de la valeur ppH$_2$O$_{limit}$ dans les conditions de réaction, tenant compte de la température de la zone réactionnelle et des propriétés du catalyseur utilisé dans l'étape de synthèse Fischer-Tropsch (diamètre moyen des pores);

b) mesure de la pression partielle de vapeur d'eau, comparaison avec la valeur ppH$_2$O$_{limit}$ et ajustement éventuel de ladite pression partielle dans le réacteur de synthèse Fischer-Tropsch (ppH$_2$O$_{react}$ ) à l'aide d'au moins un moyen sélectionné parmi les moyens suivants, pour vérifier la condition ppH$_2$O$_{react}$ < ppH$_2$O$_{limit}$ :

Cet ajustement peut être effectué en utilisant tout moyen connu de l'Homme du métier et notamment un moyen sélectionné parmi les moyens suivants:

1. diminution de la pression totale,
2. introduction d'un diluant inerte dans la charge du réacteur Fischer-Tropsch,
3. augmentation du débit de charge,
4. augmentation du taux de recyclage dans le cas où la section réactionnelle ou le réacteur est équipé d'un recyclage du gaz non converti,
5. élimination en continu de tout ou partie de l'eau formée par la réaction,
6. diminution de la température opératoire.

De manière plus détaillée, cet ajustement peut être effectué en utilisant au moins un moyen sélectionné parmi les moyens suivants:

1. L'augmentation du débit de charge fraîche (gaz de synthèse) est un des moyens préférés. Il permet de réduire le temps de contact de la charge avec le catalyseur, donc de réduire le taux de conversion de CO par passe et par conséquent de réduire la pression partielle d'eau. En outre, cette action présente l'avantage d'augmenter la productivité de l'unité sans dégrader la sélectivité intrinsèque de la réaction Fischer-Tropsch.

2. L'augmentation du taux de recyclage du gaz non converti, dans le cas où la section réactionnelle ou le réacteur est équipé d'un recyclage interne, compte parmi les moyens d'action préférés. Il engendre la diminution du taux de conversion par passe et par conséquent la diminution de la pression partielle d'eau dans la section réactionnelle.

3. La diminution de la température conduit à un ralentissement de la cinétique de la réaction selon la loi d'Arrhenius. Par conséquent, la diminution de la température provoque une diminution du taux de conversion de CO et donc une diminution de la pression partielle d'eau. Cette action présente l'inconvénient de réduire également la productivité du procédé.

4. La diminution de la pression totale a un impact direct sur les pressions partielles et donc sur la pression partielle d'eau. Elle a également un impact sur la cinétique de la réaction, ce qui conduit aussi à une diminution de la pression partielle d'eau par diminution du niveau de conversion. Toutefois, ce moyen présente un impact négatif sur la production du procédé. Il est également plus difficile à mettre en oeuvre.

5. L'introduction d'un diluant inerte, de l'azote ou du méthane par exemple, à l'entrée de la section réactionnelle conduit à des conditions cinétiques de synthèse Fischer-Tropsch moins favorables et à une diminution de la pression partielle d'eau dans le réacteur. Toutefois, cette option n'est généralement pas l'option préférée car elle est difficile à mettre en oeuvre industriellement (problème de disponibilité de l'inerte par exemple).

6. Une autre méthode consiste à éliminer en continu l'eau formée par la réaction au moyen d'un dispositif de séparation implanté dans la zone réactionnelle ou dans une boucle de recyclage. Une telle séparation peut par exemple être réalisée au moyen d'un ballon permettant de séparer la phase aqueuse et la phase organique dans une boucle de recyclage ou au moyen d'une membrane implantée dans cette boucle ou dans le réacteur.

Le choix de l'un de ces moyens dépend essentiellement des moyens disponibles sur l'unité industrielle et des conditions opératoires au moment du choix.

Les moyens préférés utilisés à l'étape b) d'ajustement éventuel de la pression partielle de vapeur d'eau dans le réacteur sont en général les suivants:

1. Augmentation du débit de charge,
2. Augmentation du taux de recyclage du gaz non converti, dans le cas où la section réactionnelle ou le réacteur est équipé d'un recyclage interne,
3. Diminution de la température.

De manière très préférée le moyen 1 ou le moyen 2 est utilisé.

La méthode décrite permet ainsi de maximiser la stabilité du catalyseur dans le procédé Fischer-Tropsch. Elle permet notamment de limiter le phénomène de dégradation mécanique du catalyseur et de maintenir son activité.

La portée de l'invention pourra être mieux comprise au vu de l'exemple 1 ci-dessous mais qui ne revêt aucun caractère limitatif.

Exemple 1

La réaction de synthèse Fischer-Tropsch est mise en oeuvre dans un dispositif comprenant un réacteur de 1 litre avec un diamètre de 7,6 cm (réacteur du type parfaitement agité, CSTR selon la terminologie anglo-saxonne) maintenu en pression et en température et pouvant être opéré en continu. On alimente le réacteur par un gaz de synthèse présentant un rapport $H_2/CO$ égal à 2. Le débit de charge (gaz de synthèse) est contrôlé et peut être également ajusté pour augmenter ou diminuer le temps de réaction. La synthèse Fischer-Tropsch est effectuée à 230 °C en présence d'un catalyseur à base de cobalt supporté sur alumine gamma ($Co/Al_2O_3$=12% poids), préalablement réduit. Ledit catalyseur est mis en suspension dans 800 ml d'octadécane, et présente une granulométrie moyenne de 55 microns ($\mu$m) avec 1,3% en volume de particules de taille inférieure à 10 microns et 0,7% en volume de particules de taille supérieure à 150 microns.

Les performances catalytiques sont déterminées à partir de l'analyse de l'effluent gazeux et de la mesure de son débit.

La résistance ou dégradation mécanique du catalyseur est évaluée sous conditions réactionnelles, dans les conditions de la synthèse Fischer-Tropsch par mesure de l'attrition du solide.

L'attrition du catalyseur est évaluée par détermination de la distribution de taille de particules par granulométrie Laser avant et à l'issue du test. Les mesures dont les résultats sont présentés ci-après ont été réalisées à l'aide d'un granulomètre à diffraction laser LS230® commercialisé par la société Coulter, en utilisant l'heptane comme diluant et en appliquant des ultrasons pendant la durée nécessaire pour que la mesure soit stabilisée (en général de 1 à 15 minutes). L'activité du catalyseur est évaluée à partir du niveau de conversion des réactifs, conversion de CO par exemple, dans un test catalytique mettant en oeuvre la réaction Fischer-Tropsch dans des conditions données (P, T, WH...).

Plusieurs expériences sont réalisées dans différentes conditions d'alimentation en gaz de synthèse :

cas 1 : la réaction est effectuée à 230 °C sous 30 bar et le débit de charge est de 100 Nl/h (VVH: 2000 $h^{-1}$)
cas 2 : la réaction est effectuée à 230 °C sous 30 bar et le débit de charge est de 220 Nl/h (VVH: 4400 $h^{-1}$)
cas 3 : la réaction est effectuée à 220 °C sous 30 bar et le débit de charge est de 124 Nl/h (VVH: 2480 $h^{-1}$)
cas 4: la réaction est effectuée à 230°C sous 30 bar et le débit de charge est de 220 Nl/h (VVH: 4400 h-1). Le catalyseur présente un diamètre plus faible que dans les cas 1 à 3 (8 nm au lieu de 10 nm).

| | cas 1 | cas 2 | cas 3 | cas 4 |
|---|---|---|---|---|
| T (°C) | 230 | 230 | 220 | 230 |
| P (bar) | 30 | 30 | 30 | 30 |
| diamètre moyen des pores du catalyseur (nm) | 10 | 10 | 10 | 8 |
| Débit de charge (Nl/h) | 100 | 220 | 124 | 220 |
| Conversion de CO initiale | 73,3 % | 42,4 % | 42,2% | 42,4 % |
| $PpH_2O_{react.}$ initiale (bar) | 12,5 | 5,6 | 5,6 | 5,6 |
| $PpH_2O_{react.}$ moyenne au cours de l'essai (bar) | 8,1 | 5,5 | 5,1 | 5,0 |
| $PpH_2O_{limit}$ (bar) | 6 | 6 | 4,87 | 4,08 |
| $ppH_2$ initiale (bar) | 7,9 | 14,7 | 14,8 | 14,7 |
| conversion résiduelle après 850 h (%) | 49 % | 98 % | 88 % | 85 % |
| granulométrie du catalyseur (% vol. < 10 micron) | | | | |
| - initiale | 1,3 | 1,3 | 1,3 | 1,3 |
| - à l'issue du test | 13,1 | 4,1 | 7,8 | 8,8 |

Les résultats de granulométrie évaluant la quantité de fines (taille inférieure à 10 microns) indiquent que les catalyseurs qui sont mis en oeuvre dans le réacteur dans des conditions telles que $ppH_2O_{react}$ reste inférieur à $ppH_2O_{limit}$ présentent une meilleure résistance mécanique (résistance à l'attrition). Il est ainsi observé que la formation de fines (particules de taille inférieure à 10 micron) est nettement supérieure dans les cas 1, 3 et 4.

Le cas 2 (selon l'invention) illustre que, de façon concomitante, l'activité du catalyseur reste plus stable lorsque la pression partielle d'eau est en deçà de la valeur limite selon l'invention.

## Revendications

1. Procédé de synthèse d'hydrocarbures à partir d'une charge de type gaz de synthèse dans lequel on met en contact ledit gaz de synthèse avec un catalyseur dans un réacteur dans les conditions de synthèse Fischer-Tropsch et dans lequel on contrôle la pression partielle d'eau pour la maintenir en deçà d'une valeur critique $ppH_2O_{limit.}$ définie par

la formule:

$$ppH_2O_{limit.} = \exp(-7751/d_p.T).P_s(T)$$

où

T est la température de réaction en K,
$d_p$ est le diamètre moyen des pores du catalyseur en nm, déterminé par adsorption-désorption d'azote (méthode BJH),
$P_s(T)$ est la pression de vapeur saturante de l'eau à la température T, en bar,

et dans lequel la pression partielle d'eau est contrôlée en mettant en oeuvre les actions suivantes:

a) détermination de la valeur $ppH_2O_{limit}$ dans les conditions de réaction, tenant compte de la température de la zone réactionnelle et des propriétés du catalyseur utilisé dans l'étape de synthèse Fischer-Tropsch (diamètre moyen des pores);
b) mesure de la pression partielle de vapeur d'eau, comparaison avec la valeur $ppH_2O_{limit}$ et ajustement éventuel de ladite pression partielle dans le réacteur de synthèse Fischer-Tropsch ($ppH_2O_{react}$) à l'aide d'au moins un moyen sélectionné parmi les moyens suivants, pour vérifier la condition $ppH_2O_{react} < ppH_2O_{limit}$ :

1. diminution de la pression totale,
2. introduction d'un diluant inerte dans la charge du réacteur Fischer-Tropsch,
3. augmentation du débit de charge,
4. augmentation du taux de recyclage dans le cas où la section réactionnelle ou le réacteur est équipé d'un recyclage du gaz non converti,
5. élimination en continu de tout ou partie de l'eau formée par la réaction,
6. diminution de la température opératoire.

**2.** Procédé selon la revendication 1 dans lequel la pression partielle d'eau dans le réacteur est contrôlée et maintenue en deçà de la valeur $0,95.ppH_2O_{limit.}$.

**3.** Procédé selon l'une des revendications 1 à 2 dans lequel la pression partielle d'eau dans le réacteur est contrôlée et maintenue en deçà de la valeur $0,8.ppH_2O_{limit.}$.

**4.** Procédé selon l'une des revendications précédentes dans lequel ledit moyen sélectionné est choisi parmi les moyens suivants:

1. augmentation du débit de charge,
2. augmentation du taux de recyclage du gaz non converti, dans le cas où la section réactionnelle ou le réacteur est équipé d'un recyclage interne,
3. diminution de la température

**5.** Procédé selon l'une des revendications précédentes dans lequel ledit catalyseur comprend un support.

**6.** Procédé selon la revendication 5 dans lequel le support du catalyseur contient l'élément Al.

**7.** Procédé selon l'une des revendications 1 à 6 dans lequel ledit catalyseur comprend un support à base d'alumine et contient du cobalt.

**8.** Procédé selon l'une des revendications précédentes dans lequel ledit catalyseur a un diamètre moyen de pores compris entre 0,1 et 100 nm.

**9.** Procédé selon la revendication 8 dans lequel ledit catalyseur a un diamètre moyen de pores compris entre 1 et 50 nm.

**10.** Procédé selon l'une des revendications précédentes dans lequel ladite pression partielle d'eau dans le réacteur est strictement inférieure à la pression partielle d'hydrogène.

**11.** Procédé selon la revendication 10 dans lequel ladite pression partielle d'eau dans le réacteur est inférieure ou égale à 0,8 fois la pression partielle d'hydrogène.

**12.** Procédé selon l'une des revendications 10 ou 11 dans lequel ladite pression partielle d'eau dans le réacteur est inférieure à 0,7 fois la pression partielle d'hydrogène.

**13.** Procédé selon l'une des revendications précédentes dans lequel le réacteur de synthèse Fischer-Tropsch est opéré sous une pression totale comprise entre 0,1 et 15 MPa, à une température comprise entre 100 et 500°C et avec une vitesse volumétrique horaire du gaz de synthèse comprise entre 100 et 20000 h$^{-1}$.

**Claims**

**1.** Process for the synthesis of hydrocarbons from a synthesis gas type feedstock wherein said synthesis gas is brought into contact with a catalyst in a reactor under Fischcr-Tropsch conditions and wherein the partial pressure of water is controlled in order to keep it below a critical value $ppH_2O_{limit}$ defined by the formula:

$$ppH_2O_{limit} = \exp(-7751/d_p.T).P_s(T)$$

where

T is the reaction temperature in K,
$d_p$ is the average diameter of the catalyst pores in nm, determined by nitrogen adsorption-desorption (BJH method),
$P_s(T)$ is the saturating water vapour pressure at temperature T, in bar,

wherein the partial pressure of water is controlled by implementing the following actions:

a) determination of the value $ppH_2O_{limit}$ under the reaction conditions, taking account of the temperature of the reaction zone and properties of the catalyst used in the Fischer-Tropsch synthesis stage (average pore diameter);
b) measurement of the partial pressure of water vapour, comparison with the value $ppH_2O_{limit}$ and any necessary adjustment of said partial pressure in the Fischer-Tropsch synthesis reactor ($ppH_2O_{react}$) using at least one means selected from the following means, to verify the condition $ppH_2O_{react} < ppH_2O_{limit}$:

1. reduction of the total pressure,
2. introduction of an inert diluent into the feedstock of the Fischer-Tropsch reactor,
3. increase in the feedstock flow rate,
4. increase in the rate of recycling in the case where the reaction section or the reactor is equipped with means of recycling unconverted gas,
5. continuous elimination of all or part of the water formed by the reaction,
6. reduction in the operating temperature,

**2.** Process according to claim 1 wherein the partial pressure of water in the reactor is controlled and kept below the value $0.95.ppH_2O_{limit}$.

**3.** Process according to anyone of claims 1. or 2 wherein the partial pressure of water in the reactor is controlled and kept below the value $0.8.ppH_2O_{limit}$.

**4.** Process according to anyone of the previous claims in which said selected means is chosen from the following means:

1. increase in the feedstock flow rate,
2. increase in the rate of recycling of unconverted gas, in the case where the reaction section or the reactor is equipped with internal recycling means,
3. reduction in the temperature.

**5.** Process according to anyone of the previous claims wherein said catalyst comprises a support.

6. Process according to claim 5 wherein the catalyst support contains the element Al.

7. Process according to anyone of claims 1 to 6 wherein said catalyst comprises an alumina-based support and contains cobalt.

8. Process according to anyone of the previous claims wherein said catalyst has an average pore diameter comprised between 0.1 and 100 nm.

9. Process according to anyone of claims 1 to 7 wherein said catalyst has an average pore diameter comprised between 1 and 50 nm.

10. Process according to anyone of the previous claims wherein said partial pressure of water in the reactor is strictly less than the partial pressure of hydrogen.

11. Process according to claim 10 wherein said partial pressure of water in the reactor is less than or equal to 0.8 times the partial pressure of hydrogen.

12. Process according to one of claims 10 or 11 wherein said partial pressure of water in the reactor is less than 0.7 times the partial pressure of hydrogen.

13. Process according to anyone of the previous claims wherein the Fischer-Tropsch synthesis reactor is operated under a total pressure comprised between 0.1 and 15 MPa, at a temperature comprised between 100 and 500°C and with an hourly volume rate of the synthesis gas comprised between 100 and 20,000 $h^{-1}$.

**Patentansprüche**

1. Verfahren zur Synthese von Kohlenwasserstoffen aus einer Beschickung vom Typ Synthesegas, bei dem das Synthesegas in einem Reaktor unter den Bedingungen der Fischer-Tropsch-Synthese mit einem Katalysator in Kontakt gebracht wird und bei dem der Partialdruck des Wassers kontrolliert wird, um ihn diesseits eines kritischen Werts $ppH_2O_{limlt}$ zu halten, der durch die folgende Formel definiert wird:

$$ppH_2O_{limlt.} = exp(-7751/d_p.T).P_s(T)$$

worin

T die Reaktionstemperatur in K ist,
$d_p$ der mittlere Porendurchmesser des Katalysators in nm ist, bestimmt durch Stickstoffadsorption/-desorption (BJH-Methode),
$P_s(T)$ der Sättigungsdampfdruck des Wassers bei der Temperatur T in Bar ist,

und bei dem der Partialdruck des Wassers kontrolliert wird, indem die folgenden Maßnahmen durchgeführt werden:

a) Bestimmen des Werts für $ppH_2O_{limit}$ unter den Reaktionsbedingungen unter Berücksichtigung der Temperatur der Reaktionszone und der Eigenschaften des Katalysators, der im Schritt der Fischer-Tropsch-Synthese verwendet wird (mittlerer Porendurchmesser);
b) Messen des Partialdrucks des Wasserdampfs, Vergleichen mit dem Wert $ppH_2O_{limit}$ und gegebenenfalls Anpassen des Partialdrucks in dem Reaktor zur Fischer-Tropsch-Synthese ($ppH_2O_{react}$) mithilfe mindestens eines Mittels, ausgewählt aus den folgenden Mitteln, um die Bedingung $ppH_2O_{react} < ppH_2O_{limit}$ zu überprüfen:

1. Verringern des Gesamtdrucks,
2. Einführen eines inerten Verdünnungsmittels in die Beschickung des Fischer-Tropsch-Reaktors,
3. Erhöhen der Durchflussrate der Beschickung,
4. Erhöhen der Rückführungsrate, falls der Reaktionsabschnitt oder der Reaktor mit einer Rückführung des nicht umgewandelten Gases ausgestattet ist,
5. kontinuierliches Entfernen des gesamten oder eines Teils des Wassers, das durch die Reaktion gebildet wurde,
6. Verringern der Betriebstemperatur.

**2.** Verfahren nach Anspruch 1, bei dem der Partialdruck des Wassers in dem Reaktor kontrolliert wird und diesseits des Werts $0{,}95.ppH_2O_{limit.}$ gehalten wird.

**3.** Verfahren nach einem der Ansprüche 1 bis 2, bei dem der Partialdruck des Wassers in dem Reaktor kontrolliert wird und diesseits des Werts $0{,}8.ppH_2O_{limit.}$ gehalten wird.

**4.** Verfahren nach einem der vorhergehenden Ansprüche, bei dem das ausgewählte Mittel aus den folgenden Mitteln gewählt wird:

1. Erhöhen der Durchflussrate der Beschickung,
2. Erhöhen der Rückführungsrate des nicht umgewandelten Gases, falls der Reaktionsabschnitt oder der Reaktor mit einer internen Rückführung ausgestattet ist,
3. Verringern der Betriebstemperatur.

**5.** Verfahren nach einem der vorhergehenden Ansprüche, bei dem der Katalysator einen Träger umfasst.

**6.** Verfahren nach Anspruch 5, bei dem der Träger des Katalysators das Element Al enthält.

**7.** Verfahren nach einem der Ansprüche 1 bis 6, bei dem der Katalysator einen Träger auf der Basis von Aluminiumoxid umfasst und Cobalt enthält.

**8.** Verfahren nach einem der vorhergehenden Ansprüche, bei dem der Katalysator einen mittleren Porendurchmesser im Bereich zwischen 0,1 und 100 nm aufweist.

**9.** Verfahren nach Anspruch 8, bei dem der Katalysator einen mittleren Porendurchmesser im Bereich zwischen 1 und 50 nm aufweist.

**10.** Verfahren nach einem der vorhergehenden Ansprüche, bei dem der Partialdruck des Wassers in dem Reaktor strikt unterhalb des Wasserstoffpartialdrucks liegt.

**11.** Verfahren nach Anspruch 10, bei dem der Partialdruck des Wassers in dem Reaktor kleiner oder gleich dem 0,8-fachen Wasserstoffpartialdruck ist.

**12.** Verfahren nach einem der Ansprüche 10 oder 11, bei dem der Partialdruck des Wassers in dem Reaktor kleiner als der 0,7-fache Wasserstoffpartialdruck ist.

**13.** Verfahren nach einem der vorhergehenden Ansprüche, bei dem der Reaktor zur Fischer-Tropsch-Synthese unter einem Gesamtdruck im Bereich zwischen 0,1 und 15 MPa, bei einer Temperatur im Bereich zwischen 100 und 500 °C und mit einer Raumgeschwindigkeit pro Stunde des Synthesegases im Bereich zwischen 100 und 20.000 $h^{-1}$ betrieben wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1406988 B
- EP 0313375 A
- EP 1233011 A
- WO 2007112314 A
- US 20040127586 A
- US 6262132 B1

**Littérature non-brevet citée dans la description**

- **M. Rothaemel.** *Catalysis Today,* 1997, vol. 38 (1), 79-84
- **P.J van Berge.** *Catalysis today,* Mai 2000, vol. 58 (4), 321-334
- **Dalai et al.** *Applied Catalysis A: General,* 2005, vol. 289, 135-142
- *J. Catal,* 2002, vol. 211, 422
- **M E Dry.** *Stud Surf Sci Cata,* 2004, vol. 152, 577-578